# EUROPÄISCHE PATENTSCHRIFT

(11) **EP 2 024 122 B1**
(45) Veröffentlichungstag und Bekanntmachung des Hinweises auf die Patenterteilung: **10.11.2010**
(21) Anmeldenummer: 07725382.1
(22) Anmeldetag: 19.05.2007
(51) Int. Cl.: B23D 55/08

(54) **BANDSÄGE UND VERFAHREN ZUM POSITIONIEREN EINES BANDSÄGEBLATTS IM RAUM**
BAND SAW AND METHOD OF SPATIALLY POSITIONING A BAND SAW BLADE
SCIE À RUBAN ET PROCÉDÉ DE POSITIONNEMENT D'UNE LAME DE SCIE À RUBAN DANS L'ESPACE

(30) Priorität: 22.05.2006 DE 102006024646; 23.01.2007 DE 102007005581
(43) Veröffentlichungstag der Anmeldung: 18.02.2009
(73) Patentinhaber: Esterer WD GmbH, 72770 Reutlingen (DE)
(72) Erfinder: DIETZ, Hanz, 72119 Ammerbuch (DE); BERGVALL, Jean, Gunnar, 84503 Altoetting (DE)
(74) Vertreter: Witte, Alexander
(86) Internationale Anmeldenummer: PCT/EP2007/004474
(87) Internationale Veröffentlichungsnummer: WO 2007/134820

(56) Entgegenhaltungen:
- WO-A-00/47378
- US-A- 3 318 347

## Beschreibung

Die Erfindung betrifft eine Bandsäge mit einem Bandsägeblatt, gegen das ein Sägegut in einer Vorschubrichtung führbar ist, mit einer Führung für das Bandsägeblatt; wobei die Führung mindestens einen Magneten aufweist, der eine die Position des Bandsägeblatts im Raum beeinflussende Kraft auf das Bandsägeblatt ausübt, ferner der mindestens eine Magnet in seiner Kraftwirkung einstellbar und die Kraft quer zur Vorschubrichtung gerichtet ist.

Die Erfindung betrifft ferner ein Verfahren zum Positionieren eines Bandsägeblatts im Raum, während ein Sägegut in einer Vorschubrichtung gegen das Bandsägeblatt geführt wird, bei dem eine Magnetkraft auf das Bandsägeblatt ausgeübt und die Magnetkraft und dadurch eine Position des Bandsägeblatt quer zur Vorschubrichtung eingestellt wird.

Ein Verfahren und eine Vorrichtung der vorstehend genannten Art sind aus der SE 436 849 B bekannt. Ein Bandsägeaggregat der eingangs genannten Art ist in der US 3 318 347 beschrieben. Eine Bandsäge gemäß dem Oberbegriff von Anspruch 1 und ein Verfahren gemäß dem Oberbegriff von Anspruch 14 sind auch aus der WO 00/47378 bekannt.

Bandsägen bestehen meist aus zwei übereinander, gelegentlich auch nebeneinander angeordneten Rollen mit horizontaler Drehachse, über die ein Bandsägeblatt geführt ist. Eine der Rollen wird angetrieben und bewegt auf diese Weise das Bandsägeblatt in Längsrichtung. Beispielsweise sind Bandsägeblätter 10 m lang und laufen mit einer Geschwindigkeit von ca. 30 bis 45 m/s.

Damit das Bandsägeblatt stabil läuft, auch wenn ein Sägegut, beispielsweise Holz, mit einer bestimmten Kraft von vorne gegen eine mit Zähnen versehene Schmalseite des Bandsägeblatts geführt wird, wird das Bandsägeblatt mit hohen Kräften mechanisch gespannt. Dies geschieht dadurch, dass der Achsabstand der Rollen nach dem Auflegen des Bandsägeblatts vergrößert wird.

Es ist ferner bekannt, das Bandsägeblatt, das ansonsten entlang einer die Rollen verbindenden, gemeinsamen Tangente laufen würde, mittels zweier entlang des betreffenden Trums voneinander beabstandeter mechanischer Führungselemente nach außen zu drücken, so dass es abschnittsweise parallel zu und im Abstand von der Tangente verläuft. Dies hat zur Folge, dass die freie Weglänge des Bandsägeblatts auf den Abstand zwischen den beiden Führungselementen verkürzt wird und das Bandsägeblatt dadurch einer seitlich wirkenden Kraft einen höheren Widerstand entgegen setzt.

Bandsägeblätter sind nicht nur durch eine derartige Vorspannung, sondern auch durch das Sägen selbst unterschiedlichen mechanischen Belastungen ausgesetzt. Diese Belastungen bewirken, dass das Bandsägeblatt ausweicht. Je nachdem, wie die beim Sägen chaotisch und ungleichmäßig auf das Bandsägeblatt einwirkenden Kräfte an diesem angreifen, ergeben sich unterschiedliche Ausweichbewegungen.

Eine erste derartige Ausweichbewegung ist entgegen der Vorschubrichtung gerichtet. Diese Ausweichbewegung wird üblicherweise dadurch aufgefangen, dass das Bandsägeblatt über Rollen geführt wird, die an ihrem Umfang ballig ausgebildet sind. Die Ausweichbewegung ist dabei hinsichtlich der Maßhaltigkeit des Sägevorganges und der Qualität der dabei hergestellten Oberfläche weniger kritisch.

Eine zweite Ausweichbewegung ist seitlich gerichtet. Diese Ausweichbewegung ist deutlich kritischer, weil sie sowohl die Maßhaltigkeit als auch die Oberflächenqualität beeinflusst. Dieser Ausweichbewegung wird bei herkömmlichen Bandsägen, wie bereits erwähnt, im Wesentlichen nur durch eine hohe Spannung des Bandsägeblatts und durch eine Verkürzung von dessen freier Länge begegnet.

Schließlich kann es auch vorkommen, dass das Bandsägeblatt sich um seine Längsrichtung verdreht.

All diese Ausweichbewegungen sind im Betrieb nachteilig. Sie bewirken einerseits eine Dehnung des Bandsägeblatts und andererseits einen erhöhten Verschleiß. Weiterhin wird auch die Qualität, d.h. sowohl die Maßhaltigkeit als auch die Güte der erzeugten Oberfläche, des Sägeschnitts negativ beeinflusst, wenn das Bandsägeblatt beim Sägen seitlich ausweicht oder sich verdreht.

Um diese Bewegungen bzw. Verformungen so gering wie möglich zu halten, sind zahlreiche mechanische Führungen für das Bandsägeblatt vorgeschlagen worden. Diese Führungen sind im Allgemeinen als Gleitführungen oder als Führungsrollen ausgebildet. Diese Führungen haben jedoch ihrerseits den Nachteil, dass sie infolge Friktion ebenfalls einen Verschleiß bewirken.

Aus diesem Grunde ist auch schon eine magnetische Führung eines Bandsägeblatts vorgeschlagen worden.

In der Druckschrift DE 201 05 845 U1 ist eine solche magnetische Bandsägepositioniervorrichtung beschrieben. Diese bekannte Vorrichtung besteht im Wesentlichen aus einer U-förmigen Führung, deren Schenkel sich beidseits des zu positionierenden Bandsägeblatts erstrecken. Die Führung ist insgesamt über Federn in Vorschubrichtung des Sägeguts gegen ein maschinenfestes Lager abgestützt.

In die beiden Schenkel der Führung sind jeweils zwei parallele Reihen von einander gegenüberstehenden Magneten, offensichtlich von Permanentmagneten, eingelassen, wobei sich die Reihen parallel zur Längsrichtung des Bandsägeblatts erstrecken. Die eine Reihe ist neben dem Zahngrund der Zähne des Bandsägeblatts und die andere Reihe ist neben den hinteren Kanten einer in Längsrichtung durchgehenden Sägeblattlochung positioniert. Über die Polarisierung der Magnete und deren Wechselwirkung mit dem Bandsägeblatt ist in der Druckschrift nichts angegeben.

Die Schenkel der Führung sind so lang dimensioniert und die Führung ist relativ zum Bandsägeblatt so positioniert, dass die Rückseite des Bandsägeblatts einen Abstand von dem die Schenkel verbindenden Flansch einhält. Dadurch kann das Bandsägeblatt bei großen Vorschubkräften trotz der Wirkung der Magnete etwas in Vorschubrichtung verschoben werden, wobei schließlich auch die federnde Abstützung der Führung begrenzend wirkt.

Die Führung bewirkt ausschließlich eine Abstützung des Bandsägeblatts entgegen der Vorschubrichtung und wirkt daher nur der wenig kritischen Ausweichbewegung des Bandsägeblatts in Vorschubrichtung entgegen. Seitliche Ausweichbewegungen und ein Verdrehen das Bandsägeblatts werden durch die bekannte Führung nicht verhindert, die daher zur Verbesserung der Qualität der Sägeschnitte hinsichtlich Maßhaltigkeit und Oberflächengüte nichts beiträgt.

Die eingangs genannte Druckschrift SE 436 849 B beschreibt eine Kreis- oder Bandsäge, bei der mittels zweier, auf gegenüberliegenden Seiten des Sägeblatts angeordneten Elektromagneten eine Kraft auf das Sägeblatt ausgeübt wird. Mittels eines Sensors wird die seitliche Position des Sägeblatts erfasst, mit einer Sollposition verglichen und das Sägeblatt durch entsprechende Ansteuerung der Magnete ggf. in die Sollposition zurückgeführt. Auf diese Weise soll ein Flattern des Sägeblatts vermieden werden.

Der Erfindung liegt daher die Aufgabe zugrunde, eine Bandsäge sowie ein Verfahren zum Positionieren eines Bandsägeblatts der eingangs genannten Art dahingehend weiterzubilden, dass die vorstehend genannten Nachteile vermieden werden. Insbesondere soll es die Erfindung ermöglichen, Bandsägeblätter berührungslos und in ihrer Position präzise zu führen, wobei insbesondere ein seitliches Ausweichen und ein Verdrehen des Bandsägeblatts vermieden bzw. auf ein nicht mehr störendes Maß vermindert werden.

Bei einer Bandsäge der eingangs genannten Art wird diese Aufgabe erfindungsgemäß dadurch gelöst, dass die Führung, in Vorschubrichtung des Sägeguts gesehen, einen vorderen Magneten und einen hinteren Magneten aufweist, wobei die Magneten einem vorderen Bereich bzw. einem hinteren Bereich des Bandsägeblatts gegenüberstehen.

Bei einem Verfahren der eingangs genannten Art wird die Aufgabe erfindungsgemäß dadurch gelöst, dass unterschiedlich eingestellte Magnetkräfte, in Vorschubrichtung eines Sägeguts gesehen, auf einen vorderen Bereich bzw. auf einen hinteren Bereich des Bandsägeblatts ausgeübt werden.

Die der Erfindung zugrunde liegende Aufgabe wird auf diese Weise vollkommen gelöst.

Die Art und Weise der erfindungsgemäßen Positionierung gestattet es nämlich erstmals, ein Bandsägeblatt berührungslos seitlich zu führen. Damit wird nicht nur der Verschleiß des Bandsägeblatts minimiert, sondern auch die Qualität der ausgeführten Sägeschnitte optimiert. Ferner werden Bandgeschwindigkeiten bis über 100 m/s erreicht.

Die Maßnahme, die Magnete mit unterschiedlichen Magnetkräften zu betreibenhat den Vorteil, dass eine Schräglage bzw. ein Verdrehen durch unterschiedliche Einwirkung auf dessen vorderen und dessen hinteren Bereich kompensiert werden kann. Es wird dabei ein Drehmoment auf das Bandsägeblatt ausgeübt, das diese Verdrehung kompensiert. Andererseits eröffnet sich dadurch die Möglichkeit, das Bandsägeblatt gezielt zu verdrehen und damit relativ zur Vorschubrichtung des Sägeguts schräg zu stellen, um auf diese Weise gerade, jedoch schräge oder bogenförmige Sägeschnitte zu führen. Dies ist besonders vorteilhaft bei Sägegut, das eine konische oder eine gebogene Form hat, wie dies bei natürlich gewachsenen Baumstämmen der Fall ist.

Bei einer bevorzugten Ausgestaltung der erfindungsgemäßen Bandsäge ist der mindestens eine Magnet ein Elektromagnet.

Diese Maßnahme hat den Vorteil, dass Bauelemente verwendet werden, die als kommerzielle Produkte in der benötigten Dimension und Präzision kostengünstig zur Verfügung stehen.

Weiterhin ist eine Ausführungsform einer erfindungsgemäßen Bandsäge bevorzugt, bei der die Führung Sensoren zum Erfassen der Position des Bandsägeblatts in einer Richtung quer zur Vorschubrichtung aufweist, wobei die Sensoren über einen Regler mit dem mindestens einen Magneten in Wirkverbindung stehen und vorzugsweise dem Regler ein Sollwert für die Position zuführbar ist. Entsprechend wird verfahrensmäßig die Position des Bandsägeblatts erfasst und durch das Einstellen eines Betrages der Magnetkraft auf einen Sollwert geregelt.

Diese Maßnahmen haben den Vorteil, dass ein geschlossener Regelkreis vorhanden ist, der eine präzise Positionierung des Bandsägeblatts erlaubt und damit alle auftretenden Störgrößen, darunter auch thermische und sonstige Einflussgrößen, eliminiert.

Bei einer besonders bevorzugten Weiterbildung dieses Ausführungsbeispiels, die auch in Alleinstellung ohne die übrigen geschilderten Merkmale verwendbar ist, sind den Sensoren Mittel zum Erfassen einer Eigenfrequenz des außer Eingriff und/oder im Eingriff mit dem Sägegut befindlichen, umlaufenden Bandsägeblatts zugeordnet, und die Mittel führen dem mindestens einen Magneten Steuersignale zum Kompensieren von periodischen und quer zur Vorschubrichtung gerichteten Bewegungen des Bandsägeblatts im Takt der Eigenfrequenz zu. Verfahrensmäßig wird eine Eigenfrequenz des außer Eingriff und/oder im Eingriff mit dem Sägegut befindlichen, umlaufenden Bandsägeblatts erfasst, und die Magnetkraft wird zum Kompensieren von periodischen und quer zur Vorschubrichtung gerichteten Bewegungen des Bandsägeblatts im Takt der Eigenfrequenz eingestellt.

Diese Maßnahmen haben den Vorteil, dass eine wirkungsvolle Kompensation einer wesentliche Störgröße möglich wird, nämlich der Eigenresonanz der Bandsäge. Wie alle bewegten Systeme weist auch die Bandsäge eine oder mehrere derartige Eigenresonanzen mit einer Grundwelle und Oberwellen auf. Diese Eigenresonanz führt zu einem Schwingen des Bandsägeblatts in seitlicher Richtung, auch als Torsion, mit hohen Frequenzen. Im Rahmen der vorliegenden Variante werden diese Frequenzen der Grund- und Oberwellen vorab bestimmt. Die Schwingung des Bandsägeblatts infolge Eigenresonanz wird dann durch Interferenz ausgelöscht, indem auf das Bandsägeblatt eine oszillierende Kraft gleicher Frequenz und entgegengesetzter Richtung ausgeübt wird.

Analog kann bei einem weiteren Phänomen von Bandsägen verfahren werden, nämlich der Störung infolge des umlaufenden Stoßes des Bandsägeblatts. Dieser Stoß, der die beiden Enden des Bandsägeblatts miteinander verbindet, und der durch Löten oder Schweißen hergestellt ist, stellt eine Diskontinuität in Gestalt einer Unebenheit dar, die beim Umlaufen jedes Mal eine Ausweichbewegung erzeugt, wenn sie über die Führung läuft. Bei dem oben genannten Beispiel eines Bandsägeblatts von 10 m Länge und einer Geschwindigkeit von 40 m/s hat dieses Ereignis also eine Frequenz von 4 Hz bzw. einen Takt von 250 ms. Beträgt die Bandgeschwindigkeit 100 m/s, dann liegt die Frequenz bei 10 Hz und der Takt bei 100 ms.

Im Rahmen einer weiteren Variante, die ebenfalls auch in Alleinstellung ohne die übrigen geschilderten Merkmale verwendbar ist, ist demzufolge erfindungsgemäß vorgesehen, dass den Sensoren Mittel zum Erfassen einer von einem an einer Führung des Bandsägeblatts vorbeilaufenden Stoß des Bandsägeblatts verursachten periodischen Ausweichbewegung des umlaufenden Bandsägeblatts quer zur Vorschubrichtung zugeordnet sind, und dass die Mittel dem mindestens einen Magneten Steuersignale zum Kompensieren dieser Bewegungen des Bandsägeblatts im Takt des Vorbeilaufens des Stoßes an der Führung zuführen. Verfahrensmäßig ist vorgesehen, dass eine von einem an der Führung vorbeilaufenden Stoß des Bandsägeblatts verursachte periodische Ausweichbewegung des umlaufenden Bandsägeblatts quer zur Vorschubrichtung erfasst wird, und dass die Magnetkraft zum Kompensieren dieser Bewegungen des Bandsägeblatts im Takt des Vorbeilaufens des Stoßes an der Führung eingestellt wird.

Diese Maßnahme hat den Vorteil, dass auch diese periodisch auftretenden Ausweichbewegungen effektiv kompensiert werden.

Im Rahmen der vorliegenden Erfindung wird eine gute Wirkung dadurch erzielt, dass in an sich bekannter Weise die Führung, in Sägerichtung des Bandsägeblatts gesehen, ein Führungsmodul vor und ein Führungsmodul hinter dem Sägegut aufweist, bzw. es wird verfahrensmäßig die Magnetkraft, in Sägerichtung des Bandsägeblatts gesehen, vor und hinter einem Sägegut auf das Bandsägeblatt ausgeübt.

Diese Maßnahme hat den Vorteil, dass das Bandsägeblatt im Sägebereich stabilisiert wird.

Bei weiteren Ausführungsbeispielen der Erfindung sind die Magnete, quer zur Vorschubrichtung gesehen, auf beiden Seiten des Bandsägeblatts angeordnet, bzw. verfahrensmäßig wird die Magnetkraft, quer zur Vorschubrichtung gesehen, auf beide Seiten des Bandsägeblatts ausgeübt.

Diese Maßnahme hat den Vorteil, dass das Bandsägeblatt frei entlang einer für die Rollen gemeinsamen Tangente zwischen den Rollen verlaufen kann. Dadurch muss in der Ruhestellung des Bandsägeblatts keine Grundkraft von den Magneten der Magnetführung auf das symmetrisch zwischen ihnen verlaufende Bandsägeblatt ausgeübt werden. Auch die Geschwindigkeit der Lageregelung in beiden seitlichen Richtungen ist sehr hoch, weil diese nur von der Anstiegsgeschwindigkeit der Magnetkraft, also einer elektronisch regelbaren Größe, abhängt. Durch die beidseits angeordneten Magnete kann das Bandsägeblatt ferner gezielt um seine Längsachse verdreht werden.

Alternativ dazu können die Magnete, quer zur Vorschubrichtung gesehen, aber auch nur auf einer Seite des Bandsägeblatts angeordnet sein. Verfahrensmäßigwird dabei die Magnetkraft, quer zur Vorschubrichtung gesehen, auf eine Seite des Bandsägeblatts ausgeübt.

Wenn dabei das Bandsägeblatt über zwei Rollen geführt ist, sind mehrere Alternativen möglich.

In einer ersten Alternative stehen die Führungen für das Bandsägeblatt über eine die Rollen verbindende, gemeinsame Tangente nach außen vor.

Diese Maßnahme hat den Vorteil, dass bekannte und bewährte Konzepte zum Vorspannen eines Bandsägeblatts durch seitliches Auslenken verwendet werden können.

In einer zweiten Alternative stehen die Führungen für das Bandsägeblatt über die die Rollen verbindende, gemeinsame Tangente nach innen vor.

Diese Maßnahme hat den Vorteil, dass Bandsägeaggregate der bereits erwähnten Art realisiert werden können, bei denen zwei einzelne Bandsägen dicht nebeneinander angeordnet sind.

Bei einer weiteren Variante der Erfindung, die auch in Alleinstellung ohne die übrigen geschilderten Merkmale verwendbar ist, sind die Führungen, quer zur Vorschubrichtung gesehen, auf einer Seite des Bandsägeblatts angeordnet.

Dabei ist bevorzugt, wenn auf der gegenüberliegenden Seite des Bandsägeblatts Führungsblöcke vorgesehen sind.

Diese Maßnahme hat den Vorteil, dass das Bandsägeblatt bei einem gewollten Abschalten oder einem ungewollten Ausfall der Magneten in eine definierte Ruheposition gelangt, in der es gespannt auslaufen kann und nach dem Stillstand auch gehalten wird. Die gewünschte Auslenkung des Bandsägeblatts nach innen oder nach außen wird dabei dadurch bewirkt, dass der innen oder außen angeordnete Magnet in einer Normlage des Bandsägeblatts eine bestimmte Grundkraft auf das Bandsägeblatt ausübt, die je nach auftretender Ausweichbewegung moduliert, also vermindert oder erhöht wird.

In einer dritten Variante sind die Führungen entlang der die Rollen verbindenden, gemeinsamen Tangente angeordnet und bilden zugleich mechanische Führungen.

Ein weiteres Ausführungsbeispiel der Erfindung zeichnet sich dadurch aus, dass eine erste und eine zweite Bandsäge vorgesehen sind, die klappsymmetrisch nebeneinander angeordnet sind, wobei jede Bandsäge jeweils ein Bandsägeblatt aufweist, und das Sägegut gegen die Bandsägeblätter in der Vorschubrichtung führbar ist, mit jeweils einer Führung für die Bandsägeblätter, wobei die Führungen jeweils einen vorderen und einen hinteren Magneten aufweisen.

Weitere Ausführungsbeispiele ergeben sich aus der Zeichnung und der beigefügten Beschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: eine äußerst schematisierte Seitenansicht eines Ausführungsbeispiels einer erfindungsgemäßen Bandsäge, bei der das erfindungsgemäße Verfahren zum Positionieren eines Bandsägeblatts ausführbar ist;
- Figur 2:: in vergrößertem Maßstab eine Führung der Bandsäge gemäß Figur 1 in einer Ansicht entlang der Linie II-II;
- Figur 3:: ein Blockschaltbild einer elektronischen Steuereinheit, wie sie in der Führung gemäß Figur 2 verwendet werden kann;
- Figur 4:: eine Ansicht, ähnlich Figur 1, jedoch für ein weiteres Ausführungsbeispiel einer erfindungsgemäßen Bandsäge, zur Erläuterung einer Betriebsart, in der die Wechselschwellbelastung des Bandsägeblatts gering und die Schnelligkeit der Positionsregelung hoch ist;
- Figur 5:: eine Ansicht, ähnlich Figur 1, jedoch für ein weiteres Ausführungsbeispiel einer erfindungsgemäßen Bandsäge, bei der vorzugsweise zwei Bandsägen nebeneinander eingesetzt werden; und
- Figur 6:: eine Ansicht, ähnlich Figur 1, jedoch für ein weiteres Ausführungsbeispiel einer erfindungsgemäßen Bandsäge, bei der ebenfalls das Ausmaß von Wechselschwellbelastungen auf das Bandsägeblatt minimiert wird.

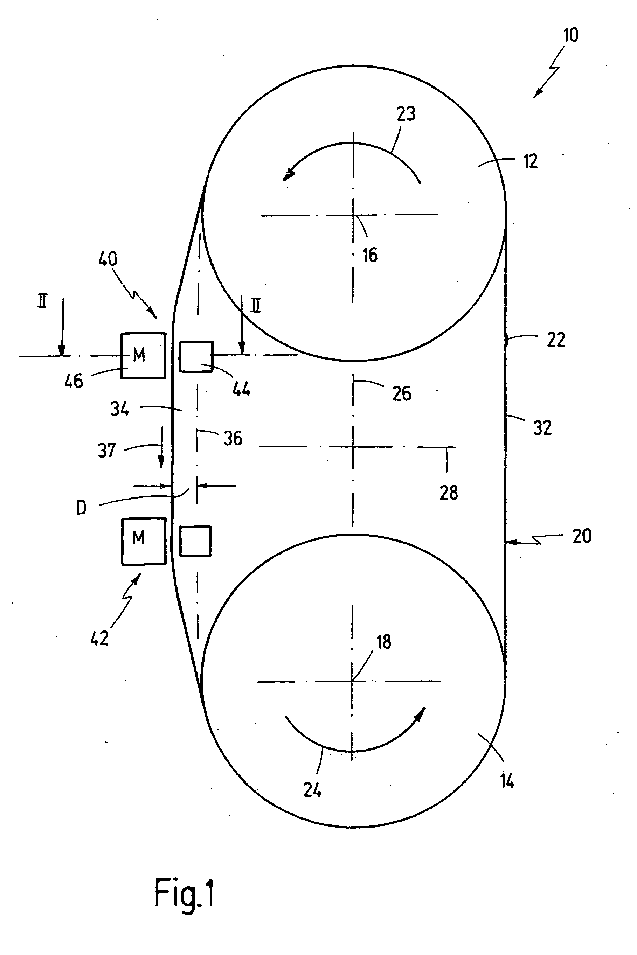

In Figur 1 bezeichnet 10 als Ganzes eine Bandsäge, wie sie typischerweise in Sägewerken zum Zerteilen von Baumstämmen, zum Zerteilen und zum Besäumen von Brettern und dgl. eingesetzt wird. Die Bandsäge 10 kann in einer Sägewerksanlage fest verbaut oder als mobiles Gerät ausgebildet sein.

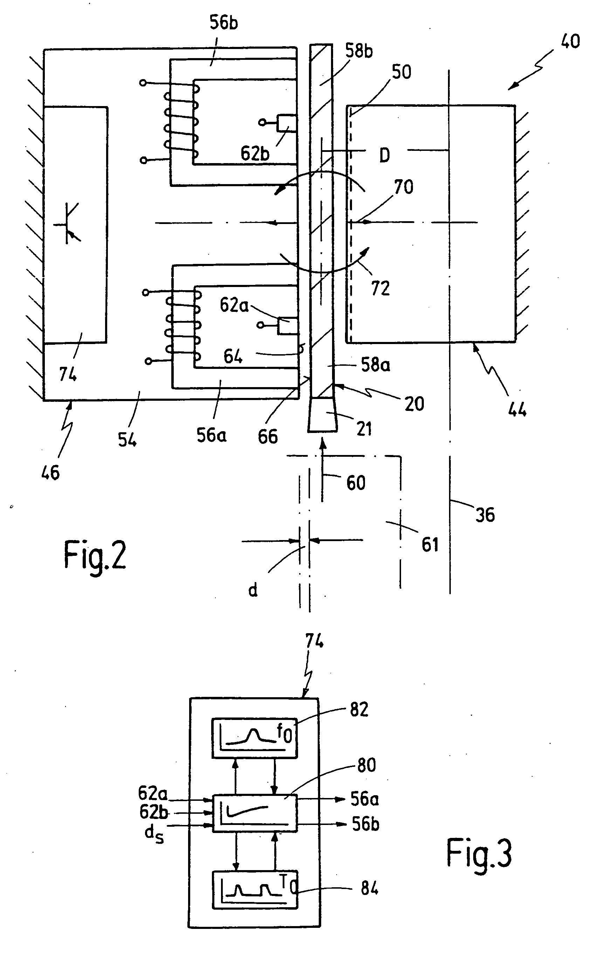

Die Bandsäge 10 weist eine obere Rolle 12 und eine untere Rolle 14 auf, die um eine horizontale obere Achse 16 bzw. untere Achse 18 rotieren. Über die Rollen 12, 14 ist ein Bandsägeblatt 20 gespannt. Das Bandsägeblatt 20 ist auf seiner in Figur 1 vorderen Seite mit Zähnen 21 versehen (vgl. Fig. 2).

Die freien Enden des Bandsägeblatts 20 sind an einem Stoß 22 miteinander verbunden, der durch Schweißen oder Löten hergestellt sein kann. Der Stoß 22 bildet gegenüber dem Bandsägeblatt 20 eine Diskontinuität in Gestalt einer Unebenheit.

Mit Pfeilen 23 und 24 ist die Drehrichtung der Rollen 12, 14 angedeutet. Die Anordnung der Rollen 12, 14 ist zu einer die Achsen 16, 18 schneidenden Vertikalachse 26 und zu einer mittig zwischen den Achsen 16, 18 verlaufenden Horizontalachse 28 symmetrisch.

Der in Figur 1 rechte Trum des Bandsägeblatts 20 ist mit 32 und der linke Trum mit 34 bezeichnet. Aus den Drehrichtungen 23, 24 der Rollen 12, 14 ergibt sich eine Laufrichtung des Bandsägeblatts 20 in seinem linken Trum 34 nach unten, wie mit einem Pfeil 37 angedeutet. Während der rechte Trum 32 tangential auf der rechten Seite der Rollen 12, 14 verläuft, hält der linke Trum 34 einen Abstand D zu einer Tangente 36 auf der linken Seite der Rollen 12, 14 ein. Dies wird durch eine obere Führung 40 sowie eine untere Führung 42 erreicht. Die Führungen 40 und 42 sind derart positioniert, dass sich zwischen ihnen ein Sägetisch befindet (nicht dargestellt), auf dem beispielsweise ein Holzbrett durch die Bandsäge 10 geschoben wird, und zwar in der Darstellung von Figur 1 senkrecht zur Zeichenebene von vorne nach hinten.

Bis hierhin entspricht die Bandsäge 10 im Wesentlichen dem Stand der Technik.

Figur 2 zeigt in einer Ansicht von oben Einzelheiten der oberen Führung 40. Die Führung 40 weist auf der in Figur 2 rechten Seite des Bandsägeblatts 20 einen maschinenfesten Führungsblock 44 und auf der linken Seite eine maschinenfeste Magnetführung 46 auf. Die Anordnung rechts/links von Führungsblock 44 und Magnetführung 46 kann dabei selbstverständlich auch umgekehrt sein. Der Begriff "maschinenfest" ist dabei so zu verstehen, dass die Elemente 44 und 46 im Betrieb der Bandsäge 10 fest mit dem Maschinenbett verbunden sind, im Übrigen jedoch verstellbar sein können, beispielsweise zu Justierzwecken. Der maschinenfeste Führungsblock 44 kann mit einer reibungsmindernden Beschichtung 50 versehen sein.

Die Magnetführung 46 weist ein Gehäuse 54 auf. In dem Gehäuse 54 befinden sich ein vorderer Elektromagnet 56a sowie ein hinterer Elektromagnet 56b, die einem vorderen Bereich 58a bzw. einem hinteren Bereich 58b des Sägeblatts 20 gegenüberstehen. Die Begriffe "vorderer" und "hinterer" beziehen sich dabei auf eine Vorschubrichtung 60 eines bei 61 angedeuteten Sägegutes, beispielsweise des bereits erwähnten Holzbretts.

Die Elektromagnete 56a und 56b sind vorzugsweise baugleich. Die in Figur 2 angedeutete Bauart mit U-förmigem Joch ist selbstverständlich nur als Beispiel zu verstehen. Prinzipiell können hier alle Bauelemente verwendet werden, die es gestatten, auf das Bandsägeblatt 20 berührungslos eine einstellbare Kraft auszuüben.

Da in jeder Magnetführung zwei Elektromagnete 56a und 56b verwendet werden, hat die Gesamtanordnung mit zwei übereinander angeordneten Magnetführungen (Figur 1) also insgesamt vier derartige Elektromagnete.

Dem vorderen Elektromagneten 56a ist ein vorderer Sensor 62a und dem hinteren Elektromagnet 56b ist ein hinterer Sensor 62b zugeordnet. Die Sensoren 62a, 62b können einen Abstand auf magnetische, kapazitive, optische, akustische oder sonstige Art erfassen. Sie messen in der Magnetführung 46 einen Abstand d zwischen der in Figur 2 rechten Oberfläche 64 der Magnetführung 46 und der in Figur 2 linken Oberfläche 66 des Bandsägeblatts 20 in dessen vorderem Bereich 58a bzw. hinterem Bereich 58b.

Wenn die Elektromagnete 56a und 56b mit der gleichen Stromstärke erregt werden, d.h. die gleiche Magnetkraft auf die Bereiche 58a und 58b ausüben, dann wird das Bandsägeblatt 20 in der Darstellung von Figur 2 unter Beibehaltung seiner Ausrichtung nach links oder nach rechts verstellt, wie mit einem Doppelpfeil 70 angedeutet. Wenn die Magnetkräfte der Elektromagneten 56a und 56b hingegen unterschiedlich sind, dann wird das Bandsägeblatt 20 um seine Mittelachse verdreht, wie mit einem Paar von Pfeilen 72 angedeutet. Auf diese Weise ist es möglich, das Bandsägeblatt schräg zur Vorschubrichtung 60 des Sägeguts 61 anzustellen. Mann kann dann schräge oder bogenförmige Sägeschnitte im Sägegut führen, beispielsweise dann, wenn das Sägegut in Vorschubrichtung 60 konisch bzw. gekrümmt ist, wie dies bei natürlich gewachsenen Baumstämmen bzw. Teilen davon der Fall ist.

Man kann daher durch selektive Ansteuerung der Elektromagnete 56a und 56b sowohl eine seitliche Ausweichbewegung als auch ein Verdrehen des Bandsägeblatts 20 kompensieren, was beispielsweise zweckmäßig ist, wenn das Sägegut 60 mit hoher Kraft in Vorschubrichtung 60 gegen die Zähne 21 des Bandsägeblatts 20 geführt wird und das Bandsägeblatt dann wegknickt, oder wenn das Bandsägeblatt 20 in inhomogene Bereiche des Sägegutes gerät, beispielsweise in Äste in einem Holzbrett.

Die Magnetkraft wird vorzugsweise wie folgt ausgeübt:
Wenn das Bandsägeblatt im Ruhezustand ist, d.h. bei nicht vorhandener Magnetkraft, liegt es, beispielsweise durch herkömmliches mechanisches Einstellen einer gewissen seitlich gerichteten Vorspannkraft von etwa 100 bis 1.000 N, beispielsweise 600 N, auf den maschinenfesten Führungsblöcken 44 auf. Unmittelbar vor oder beim Anfahren der Bandsäge 10 wird das Bandsägeblatt 20 dann durch eine im Vergleich zur mechanischen Vorspannkraft von beispielsweise 600 N höhere Magnetkraft von beispielsweise 700 N von den Führungsblöcken 44 abgehoben, bis es eine Sollstellung zwischen den Führungsblöcken 44 und den Magnetführungen 46 einnimmt, so wie dies in den Figuren 1 und 2 dargestellt ist (Abstand d₅). Dies kann unabhängig davon geschehen, ob das Bandsägeblatt 20, wie noch erläutert werden wird, um seine Längsachse verdreht wird oder nicht. In dieser Sollstellung wird das Bandsägeblatt 20 berührungslos geführt. Die Positionsregelung wird dann um diese Soll-Magnetkraft von 700 N herum durch Modulation, d.h. durch Verminderung oder durch Erhöhung der Magnetkraft, durchgeführt.

Alternativ ist es selbstverständlich auch möglich, auf die Führungsblöcke 44 zu verzichten und auf beiden Seiten des Bandsägeblatts 20 Magnetführungen 46 anzuordnen (nicht dargestellt). Dann würde die Regelung der seitlichen Lage des Bandsägeblatts 20 durch selektive Ansteuerung der Magnetführungen 46 auf beiden Seiten des Bandsägeblatts 20 bewirkt. Das Bandsägeblatt würde sich in diesem Falle entlang einer gemeinsamen Tangente beider Rollen 12 und 14 erstrecken, so wie in der rechten Hälfte von Figur 1. Bei dieser Variante würden dann rechts/links, oben/unten und vorne/hinten zusammen acht Magnete verwendet.

Figur 3 zeigt ein Blockschaltbild einer elektronischen Steuereinheit 74, die zum Ansteuern der Elektromagnete 56a und 56b verwendet werden kann und die noch weitere Funktionen ermöglicht.

Die Steuereinheit 74 enthält einen Regler 80. Dem Regler 80 werden eingangsseitig Signale der Sensoren 62a und 62b zugeführt sowie ein Sollwert d₅, der den gewünschten Abstand zwischen den Oberflächen 64 und 66 angibt. Der Regler 80 bildet in an sich bekannter Weise aus den von den Sensoren 62a und 62b gelieferten Istwerten des Abstandes d und dem vorgegebenen Sollwert d₅ Stellgrößen zum Ansteuern der Elektromagnete 56a und 56b.

Dem Regler 80 ist ferner bei Ausführungsbeispielen der Erfindung, die auch in Alleinstellung verwendbar sind, ein Frequenz-Analysator 82 zugeordnet. Der Frequenz-Analysator 82 ermittelt, beispielsweise aus den Signalen der Sensoren 62a und 62b, laufend die Eigenfrequenz oder ggf. mehrere Eigenfrequenzen f₀ der Bandsäge 10, die jedoch auch als vorab ermittelter Festwert bzw. Festwerte vorgebbar ist bzw. sind. Unterschiedliche Eigenfrequenzen fo ergeben sich üblicherweise z.B. dann, wenn sich das Bandsägeblatt 20 außer Eingriff mit dem Sägegut 61 bzw. in Eingriff damit befindet, wenn sich die Spannung des Bandsägeblatts 20 ändert usw.

Die Eigenfrequenz fo der Bandsäge 10 macht sich als periodische Schwingung des Bandsägeblatts 20 bemerkbar, die meist eine Überlagerung von seitlichen Bewegungen und von Torsionsbewegungen darstellt. Diese Eigenschwingungen hängen im Wesentlichen von der freien Weglänge des Bandsägeblatts 20 zwischen den Rollen 12, 14, der Spannkraft, dem Elastizitätsmodul des Bandsägeblatts 20 sowie dem System Säge/Sägegut bei den jeweiligen Betriebsparametern ab.

Der Regler 80 erzeugt nun aufgrund einer vom Frequenz-Analysator 82 zugeführten Führungsgröße ein periodisches Stellsignal gleicher Frequenz jedoch entgegengesetzter Polarität für die Elektromagnete 56a und 56b, so dass die Eigenschwingungen des Bandsägeblatts 20 durch Interferenz ausgelöscht werden. Es hat sich gezeigt, dass diese vorgegebene Regelung mit der vorab bekannten Frequenz fo effektiver ist als eine Ausregelung anhand von jeweils gemessenen Momentanwerten. Es versteht sich dabei, dass bei dieser Vorgehensweise nicht nur die Grundwelle der Eigenschwingung oder mehrerer Eigenschwingungen des Bandsägeblatts erfasst werden kann, sondern auch die Oberwellen.

In ähnlicher Weise wirkt bei Ausführungsbeispielen der Erfindung, die auch in Alleinstellung verwendbar sind, ein ebenfalls dem Regler 80 zugeordneter Taktgeber 84. Der Taktgeber 84 prägt dem Regler 80 eine Führungsgröße auf, die das periodische Vorbeilaufen des Stoßes 22, der eine unebene Diskontinuität darstellt, an der Magnetführung 40 kompensiert. Wenn beispielsweise das Bandsägeblatt 20 eine Länge von 10 m hat und mit einer Lineargeschwindigkeit von 40 m/s bewegt wird, dann läuft der Stoß mit einer Frequenz von 4 Hz bzw. einem Takt von 250 ms an der Magnetführung 46 vorbei. Dieses Vorbeilaufen führt zu einer Ausweichbewegung, die durch eine entsprechend getaktete Ansteuerung der Elektromagnete 56a und 56b mit einem Signal ausreichender Amplitude und entgegengesetzter Polarität kompensiert wird.

Auch hier kann es zu Änderungen der Frequenz bzw. des Taktes kommen, wenn beispielsweise eine hohe Last auf das Bandsägeblatt 20 und damit den Antriebsmotor einwirkt. Bei Bandsägen werden üblicherweise Drehstrom-Asynchronmotoren als Antriebe verwendet. Diese Motoren haben jedoch einen lastabhängigen Schlupf, so dass die Drehzahl und damit die Geschwindigkeit des Bandsägeblatts 20 um beispielsweise 1 bis 3 % schwanken kann. Vorzugsweise wird daher der Takt des vorbeilaufenden Stoßes 22 kontinuierlich erfasst, so dass auch hier eine dynamische Kompensation möglich ist.

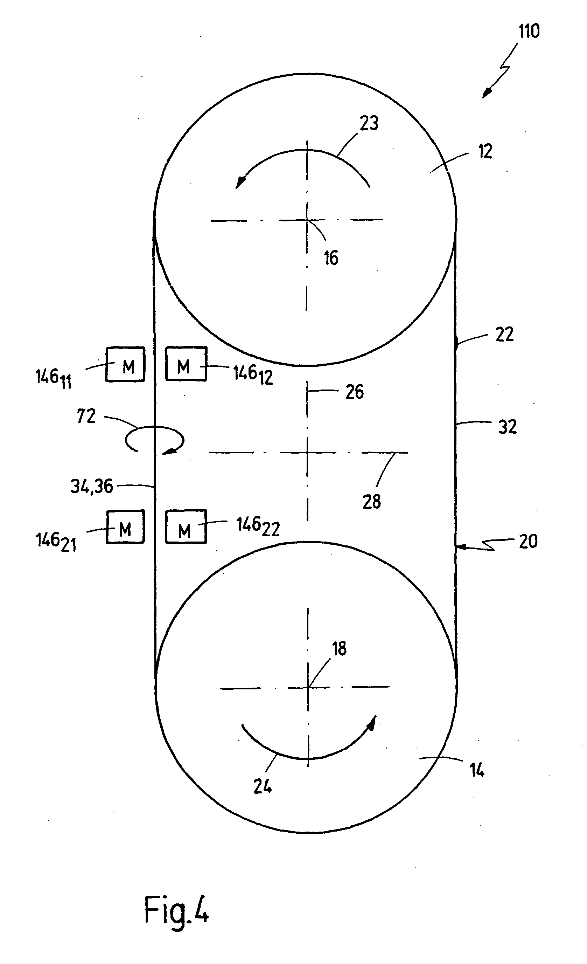

In den Figuren 4 bis 6 sind, unabhängig davon, ob das Bandsägeblatt 20 um seine Längsachse verdreht wird, drei weitere Ausführungsbeispiele von Bandsägen dargestellt, deren Grundstruktur der Bandsäge 20 aus Figur 1 entspricht. Gleiche Elemente sind in den Figuren 4 bis 6 daher mit gleichen Bezugszeichen versehen.

Beim Ausführungsbeispiel der Figur 4 ist eine Bandsäge 110 mit vier magnetischen, maschinenfesten Führungen 146₁₁, 146₁₂, 146₂₁ und 146₂₂ dargestellt, die zu zwei Paaren übereinander im Bereich des linken Trums 34 angeordnet sind. Die beiden Führungen eines Paars sind auf gegenüberliegenden Seiten des linken Trums 34 angeordnet. Die Anordnung ist im dargestellten Beispiel dabei so getroffen, dass der linke Trum 34 mit der Tangente 36 der beiden Rollen 12, 14 zusammenfällt. Die Führungen 146₁₁, 146₁₂, 146₂₁ und 146₂₂ entsprechen in ihrer Bauart vorzugsweise der Darstellung in Figur 2.

Die Anordnung der Führungen 146₁₁, 146₁₂, 146₂₁ und 146₂₂ beidseits des entlang einer Tangente an die Rollen 12, 14 verlaufenden Bandsägeblatts 20 hat zur Folge, dass im Gegensatz zu dem Ausführungsbeispiel der Figur 1 im Ruhezustand, d.h. bei nicht-ausgelenktem Bandsägeblatt 20, keine Grundkraft durch die Magnete in den Führungen 146₁₁, 146₁₂, 146₂₁ und 146₂₂ auf das symmetrisch zwischen ihnen verlaufende Bandsägeblatt 20 ausgeübt werden muss.

Ferner kann die seitliche Auslenkung des Bandsägeblatts 20 schneller bewirkt werden als dies beim Ausführungsbeispiel der Figur 1 für die Auslenkung nach rechts der Fall ist. Bei beidseitiger Anordnung der Führungen 146₁₁, 146₁₂, 146₂₁ und 146₂₂ hängt nämlich die Auslenkungsgeschwindigkeit in erster Linie von der elektronischen Steuerung der Magnete, d.h. der Anstiegsgeschwindigkeit der Magnetkraft, ab, die sehr hoch eingestellt werden kann. Beim Ausführungsbeispiel der Figur 1 hingegen vollzieht sich die Auslenkung nach rechts, d.h. vom Magneten der Magnetführung 46 weg nur unter dem Einfluss der mechanischen Federkonstanten des Systems, insbesondere des Bandsägeblatts 20.

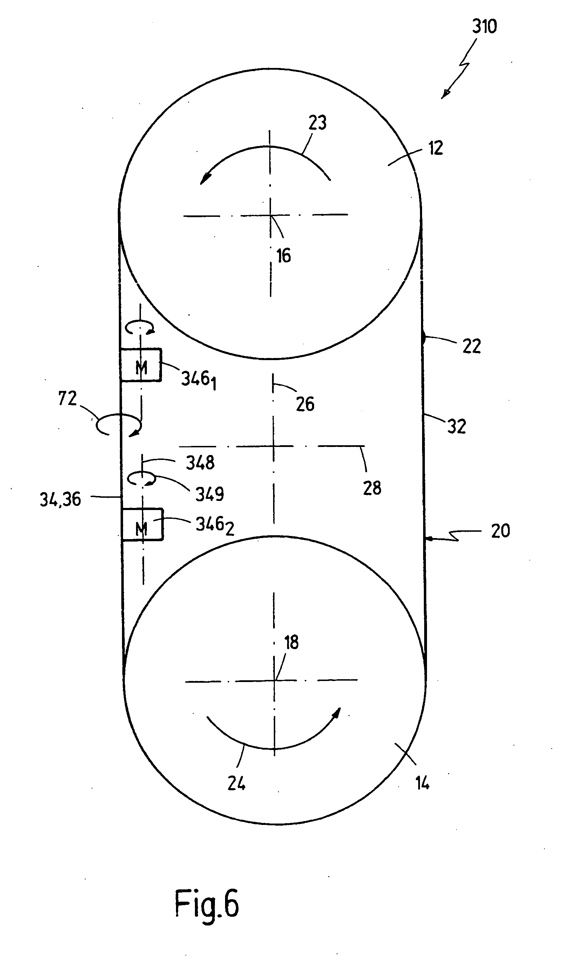

Durch diese Anordnung kann ferner besonders effektiv die bereits erwähnte Maßnahme bewirkt werden, nämlich das Bandsägeblatt im Bereich zwischen den Führungen 146₁₁, 146₁₂, 146₂₁ und 146₂₂ durch entsprechende Polarisierung der Elektromagnete 56a, 56b um eine Hochachse zu verdrehen, wie anhand der Figur 2 mit dem Pfeil 72 angedeutet. Das Ausmaß der Verdrehung wird im Rahmen der Elastizität des Bandsägeblatts 20 dadurch vergrößert, dass gemäß Figur 4 derartige Elektromagnete auf gegenüberliegenden Seiten des Bandsägeblatts 20 angeordnet sind. Sollte im Hinblick einerseits auf die Breite eines praktisch realisierbaren Luftspalts zwischen dem Bandsägeblatt 20 und den Führungen 146₁₁, 146₁₂, 146₂₁ und 146₂₂ und andererseits auf die Breite des Bandsägeblatts in Vorschubrichtung 60 kein ausreichender Verdrehwinkel erzielbar sein, dann kann man erfindungsgemäß die Führungen 146₁₁, 146₁₂, 146₂₁ und 146₂₂ auch um eine Hochachse drehbar ausbilden, wie weiter unten zu Figur 6 noch erläutert werden wird.

Wenn mit der Bandsäge 10 ein Sägegut 61 gesägt werden soll, dass in Vorschubrichtung 60 nicht gerade ist, dann kann man durch entsprechendes Ansteuern der Elektromagnete erreichen, dass das Bandsägeblatt 20 einen Schnitt führt, der nicht parallel zur Vorschubrichtung 60 verläuft und beispielsweise zur Vorschubrichtung schräg oder gebogen verlaufen kann.

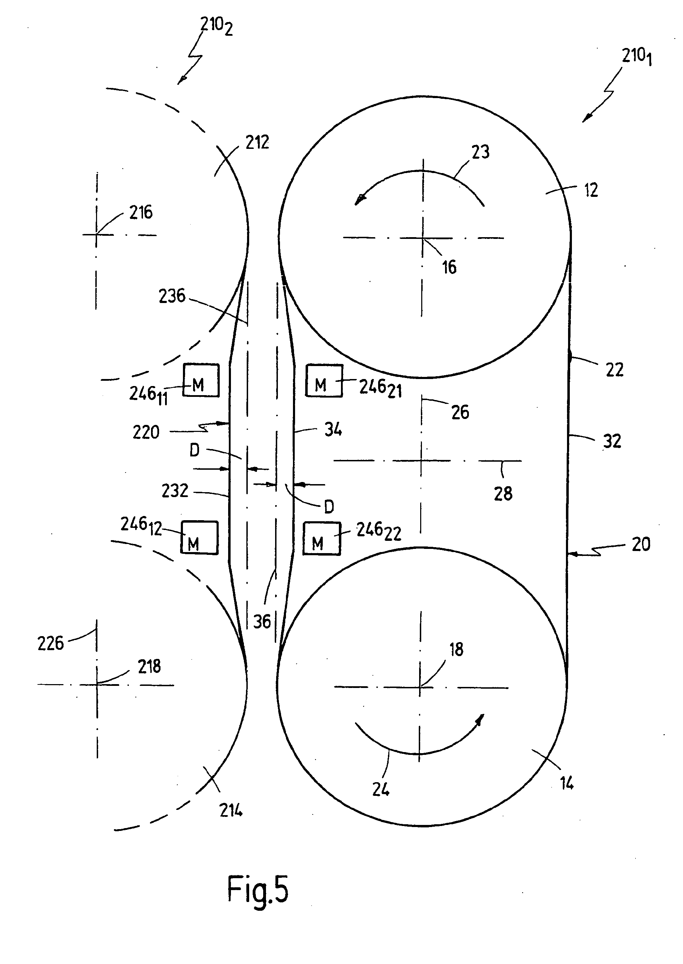

Beim Ausführungsbeispiel der Figur 5 ist ein Bandsägeaggregat vorgesehen, das neben einer ersten Bandsäge 210₁ der in Figur 1 beschriebenen Art noch eine zweite Bandsäge 210₂ aufweist, die mit der ersten Bandsäge 210₁ im Wesentlichen baugleich, aber zu dieser klappsymmetrisch angeordnet ist. Die zweite Bandsäge 210₂ weist ebenfalls Rollen 212 und 214 mit auf einer Vertikalachse 226 liegenden Achsen 216, 218 auf, über die ein Bandsägeblatt 220 läuft. Dessen rechter Trum 232 läuft in der Nähe des linken Trums 34 der ersten Bandsäge 210₁. Derartige paarweise Anordnungen von Bandsägen 210₁, 210₂ dienen dazu, ein durchlaufendes Sägegut in einem Durchlauf mit zwei parallelen Sägeschnitten zu versehen. Dabei kann senkrecht zur Zeichenebene der Figur 5 betrachtet noch ein weiteres Paar derartiger Bandsägen vorgesehen sein, um in einem Durchlauf insgesamt vier derartige Sägeschnitte anzubringen. Solche Tandem-Bandsägen sind dem Fachmann bekannt, beispielsweise aus der US 3 318 347, und brauchen daher hier nicht näher erläutert zu werden.

Um eine möglichst kompakte Anordnung zu erzielen, sind die Rollen 12, 14 bzw. 212, 214 der beiden Bandsägen 210₁ bzw. 210₂ in Figur 5 dicht nebeneinander angeordnet. Um dem Bandsägeblatt 20 bzw. 220 trotzdem eine gewisse Spannung zu verleihen, werden beim Ausführungsbeispiel der Figur 5 die Trume 34 und 232 mittels magnetischer, maschinenfester Führungen 246₁₁, 246₁₂, 246₂₁ und 246₂₂ jeweils nach "innen" zu ihrer jeweiligen Vertikalachse 26 bzw. 226 hin gezogen, d.h. in der Darstellung der Figur 5 der Trum 34 um den Abstand D von der Tangente 36 nach rechts, und der Trum 232 um den Abstand D von einer entsprechenden Tangente 236 nach links.

Würde man das Ausführungsbeispiel der Figur 1 durch Klappung um eine Hochachse in eine Tandem-Bandsäge nach Art der Figur 5 doppeln, dann wäre eine enge seitliche Annäherung der beiden Bandsägen 10 nicht möglich, weil die seitlich nach außen vorstehenden Magnetführungen 46 im Wege stünden. Man könnte ferner in dem Übergangsbereich zwischen den beiden Bandsägen 10 nur verhältnismäßig breite Bretter sägen. Mit der Anordnung gemäß Figur 5 hingegen kann man auch Sägeschnitte führen, die im Vergleich zum Ausführungsbeispiel der Figur 1 etwas näher beieinander, im Vergleich zu dem noch zu erläuternden Ausführungsbeispiel der Figur 6 etwas weiter auseinander liegen.

Es versteht sich, dass auch beim Ausführungsbeispiel der Figur 5 mechanische Führungsblöcke auf der den Magnetführungen 246₁₁, 246₁₂, 246₂₁ und 246₂₂ abgewandten Seiten der Bandsägeblätter 20 und 220 eingesetzt werden können, wie dies weiter oben zu Figur 1 beschrieben wurde.

Figur 6 zeigt schließlich eine Variante mit einer Bandsäge 310, bei der nur zwei maschinenfeste Magnetführungen 346₁ und 346₂ vorgesehen sind. Diese Magnetführungen 346₁ und 346₂ sind derart angeordnet, dass sie mit ihrer in Figur 6 linken Oberfläche mit der Tangente 36 fluchten. Wenn die Führungen 346₁ und 346₂ aktiviert werden, ziehen sie den linken Trum 34 gegen diese Oberflächen, so dass der linke Trum 34 mit der Tangente 36 zusammenfällt.

Um auch mit der Bandsäge 310 schräge oder gebogene Schnitte führen zu können, kann das Bandsägeblatt 20 in der bereits mehrfach beschriebenen Weise verdreht werden (Pfeil 72). Da die Führungen 346₁ und 346₂ jedoch zugleich mechanisch führen, müssen diese dann mit verdreht werden, wie in Figur 6 mit einer Achse 348 und einem Pfeil 349 angedeutet.

## Patentansprüche

1. Bandsäge mit einem Bandsägeblatt (20), gegen das ein Sägegut (61) in einer Vorschubrichtung (60) führbar ist, mit einer Führung (40, 42) für das Bandsägeblatt (20), wobei die Führung (40, 42) mindestens einen Magneten (56a, 56b) aufweist, der eine die Position (d) des Bandsägeblatts (20) im Raum beeinflussende Kraft (70, 72) auf das Bandsägeblatt (20) ausübt, ferner der mindestens eine Magnet (56a, 56b) in seiner Kraftwirkung einstellbar und die Kraft (70, 72) quer zur Vorschubrichtung (60) gerichtet ist, **dadurch gekennzeichnet, dass** die Führung (40, 42), in Vorschubrichtung (60) des Sägeguts (61) gesehen, einen vorderen Magneten (56a) und einen hinteren Magneten (56b) aufweist, wobei die Magneten (56a, 56b) einem vorderen Bereich (58a) bzw. einem hinteren Bereich (58b) des Bandsägeblatts (20) gegenüberstehen.

2. Bandsäge nach Anspruch 1, **dadurch gekennzeichnet, dass** mindestens zwei Magnete (56a, 56b) vorgesehen sind, dass die Magnete (56a, 56b) Elektromagnete sind und dass die Magnete (56a, 56b) mit unterschiedlichen Magnetkräften betreibbar sind, derart, dass das Bandsägeblatt (20) um seine Mittelachse verdreht (72) wird.

3. Bandsäge nach Anspruch 1 oder 2, **dadurch gekennzeichnet, dass** die Führung (40, 42) Sensoren (62a, 62b) zum Erfassen der Position (d) des Bandsägeblatts (20) in einer Richtung quer zur Vorschubrichtung (61) aufweist, und dass die Sensoren (62a, 62b) über einen Regler (80) mit den Magneten (56a, 56b) in Wirkverbindung stehen.

4. Bandsäge nach Anspruch 3, **dadurch gekennzeichnet, dass** dem Regler (80) ein Sollwert (dₛ) für die Position (d) zuführbar ist.

5. Bandsäge nach Anspruch 3 oder 4, **dadurch gekennzeichnet, dass** den Sensoren (62a, 62b) Mittel (82) zum Erfassen einer Eigenfrequenz (f₀) des außer Eingriff und/oder im Eingriff mit dem Sägegut (61) befindlichen, umlaufenden Bandsägeblatts (20) zugeordnet sind, und dass die Mittel (82) dem mindestens einen Magneten (56a, 56b) Steuersignale zum Kompensieren von periodischen und quer zur Vorschubrichtung (60) gerichteten Bewegungen des Bandsägeblatts (20) im Takt der Eigenfrequenz (fo) zuführen.

6. Bandsäge nach einem der Ansprüche 3 bis 5, **dadurch gekennzeichnet, dass** den Sensoren (62a, 62b) Mittel (84) zum Erfassen einer von einem an der Führung (40, 42) vorbeilaufenden Stoß (22) des Bandsägeblatts (20) verursachten periodischen Ausweichbewegung des umlaufenden Bandsägeblatts (20) quer zur Vorschubrichtung (60) zugeordnet sind, und dass die Mittel (84) dem mindestens einen Magneten (56a, 56b) Steuersignale zum Kompensieren dieser Bewegungen des Bandsägeblatts (20) im Takt (To) des Vorbeilaufens des Stoßes (22) an der Führung (40, 42) zuführen.

7. Bandsäge nach einem der Ansprüche 1 bis 6, **dadurch gekennzeichnet, dass** die Führung (40, 42), in Sägerichtung (27) des Bandsägeblatts (20) gesehen, ein Führungsmodul (40) vor und ein Führungsmodul (42) hinter dem Sägegut (61) aufweist.

8. Bandsäge nach einem der Ansprüche 1 bis 7, **dadurch gekennzeichnet, dass** die Führungen (146₁₁, 146₁₂, 146₂₁, 146₂₂), quer zur Vorschubrichtung (60) gesehen, auf beiden Seiten des Bandsägeblatts (20) angeordnet sind.

9. Bandsäge nach einem der Ansprüche 1 bis 8, **dadurch gekennzeichnet, dass** die Führungen (46; 246₁₁, 246₁₂, 246₂₁, 246₂₂; 346₁, 346₂), quer zur Vorschubrichtung (60) gesehen, auf einer Seite des Bandsägeblatts (20) angeordnet sind.

10. Bandsäge nach Anspruch 9, **dadurch gekennzeichnet, dass** auf einer gegenüberliegenden Seite des Bandsägeblatts (10) mechanische Führungsblöcke (44) vorgesehen sind.

11. Bandsäge nach Anspruch 9 oder 10, **dadurch gekennzeichnet, dass** das Bandsägeblatt (20) über zwei Rollen (12, 14) geführt ist, und dass die Führungen (46) über eine die Rollen (12, 14) verbindende, gemeinsame Tangente (36) nach außen vorstehen.

12. Bandsäge nach Anspruch 9, **dadurch gekennzeichnet, dass** das Bandsägeblatt (20) über zwei Rollen (12, 14) geführt ist, und dass die Führungen (346₁, 346₂) entlang einer die Rollen (12, 14) verbindenden, gemeinsamen Tangente (36) angeordnet sind und zugleich mechanische Führungen bilden.

13. Bandsägeaggregat mit einer ersten Bandsäge (210₁) und einer zweiten Bandsäge (210₂) nach einem der Ansprüche 1 bis 12, **dadurch gekennzeichnet, dass** die Bandsägen (210₁,210₂) klappsymmetrisch nebeneinander angeordnet sind, wobei jede Bandsäge (210₁, 210₂) jeweils ein Bandsägeblatt (20, 220) aufweist, und das Sägegut (61) gegen die Bandsägeblätter (20, 220) in der Vorschubrichtung (60) führbar ist, mit jeweils einer Führung (246₁₁, 246₁₂, 246₂₁, 246₂₂) für die Bandsägeblätter (20, 220), wobei die Führungen (246₁₁, 246₁₂, 246₂₁, 246₂₂) jeweils einen vorderen und einen hinteren Magneten (56a, 56b) aufweisen.

14. Verfahren zum Positionieren eines Bandsägeblatts (20) im Raum, während ein Sägegut (61) in einer Vorschubrichtung (60) gegen das Bandsägeblatt (20) geführt wird, bei dem eine Magnetkraft (70, 72) auf das Bandsägeblatt (20) ausgeübt und die Magnetkraft (70, 72) und **dadurch** eine Position (d) des Bandsägeblatts (20) quer zur Vorschubrichtung (60) eingestellt wird, **dadurch gekennzeichnet, dass** unterschiedlich eingestellte Magnetkräfte (70, 72), in Vorschubrichtung (61) eines Sägeguts (60) gesehen, auf einen vorderen Bereich (58a) bzw. auf einen hinteren Bereich (58b) des Bandsägeblatts (20) ausgeübt werden.

15. Verfahren nach Anspruch 14, **dadurch gekennzeichnet, dass** eine Eigenfrequenz (fo) des außer Eingriff und/oder im Eingriff mit dem Sägegut (61) befindlichen, umlaufenden Bandsägeblatts (20) erfasst wird, und dass die Magnetkraft (70, 72) zum Kompensieren von periodischen und quer zur Vorschubrichtung (60) gerichteten Bewegungen des Bandsägeblatts (20) im Takt der Eigenfrequenz (fo) eingestellt wird.

16. Verfahren nach Anspruch 14 oder 15, **dadurch gekennzeichnet, dass** eine von einem an einer Führung (40, 42) des Bandsägeblatts (20) vorbeilaufenden Stoß (22) des Bandsägeblatts (20) verursachte periodische Ausweichbewegung des umlaufenden Bandsägeblatts (20) quer zur Vorschubrichtung (60) erfasst wird, und dass die Magnetkraft (70, 72) zum Kompensieren dieser Bewegungen des Bandsägeblatts (20) im Takt (To) des Vorbeilaufens des Stoßes (22) an der Führung (40, 42) eingestellt wird.

## Claims

1. A band saw comprising a band saw blade (20) against which a sawing material (61) is adapted to be guided in a feed direction (60), and a guide (40, 42) for the band saw blade (20), the guide (40, 42) having at least one magnet (56a, 56b) exerting a force (70, 72) on the band saw blade (20) determining the spatial position (d) thereof, the at least one magnet (56a, 56b) being, further adjustable in its force effect and the force (70, 72) being directed transversely to the feed direction (60), **characterized in that** the guide (40, 42), as viewed in the feed direction (60) of the sawing material (61), has a front magnet (56a) and a rear magnet (56b), the magnets (56a, 56b) facing a front area (58a) and a rear area (58b), resp., of the band saw blade (20).

2. The band saw of claim 1, **characterized in that** at least two magnets (56a, 56b) are provided, that the magnets (56a, 56b) are electromagnets and that the magnets (56a, 56b) are adapted to be operated with different magnet forces, such that the band saw blade (20) is twisted (72) about its center axis (72).

3. The band saw of claim 1 or 2, **characterized in that** the guide (40, 42) has sensors (62a, 62b) for detecting the position (d) of the band saw blade (10) in a direction transverse to the feed direction (61), and that the sensors (62a, 62b) are operatively connected with the magnets (56a, 56b) via a controller (80).

4. The band saw of claim 3, **characterized in that** a desired value (dₛ) for the position (d) is adapted to be fed to the controller (80).

5. The band saw of claims 3 or 4, **characterized in that** means (82) for detecting a natural frequency (f₀) of the band saw blade (20) circulating in engagement and/or out of engagement with the sawing material (61) are associated to the sensors (62a, 62b), and that the means (82) feed control signals for compensating periodical movements of the band saw blade (20) directed transversely to the feed direction (60) to the at least one magnet (56a, 56b) in synchronism with the natural frequency (f₀).

6. The band saw of any of claims 3 to 5, **characterized in that** means (84) for detecting a periodical evasive movement of the circulating band saw blade (20) caused by a butt joint (22) running by the guide (40, 42) and being directed transversely to the feed direction (60) are associated to the sensors (62a, 62b), and that the means (82) feed control signals for compensating such movements of the band saw blade (20) to the at least one magnet (56a, 56b) in synchronism (To) with the butt joint (22) running by the guide (40, 42).

7. The band saw of any of claims 1 to 6, **characterized in that** the guides, as viewed in the sawing direction (27) of the band saw blade (20) have a guide module (40) in front of the sawing material (61) and a guide module (42) behind the sawing material (61).

8. The band saw of any of claims 1 to 7, **characterized in that** the guides (146₁₁, 146₁₂, 146₂₁, 146₂₂), as viewed transversely to the feed direction, are positioned on both sides of the band saw blade (20).

9. The band saw of any of claims 1 to 8, **characterized in that** the guides (46; 246₁₁, 246₁₂, 246₂₁, 246₂₂; 346₁, 346₂), as viewed transversely to the feed direction (60) are positioned on one side of the band saw blade (20).

10. The band saw of claim 9, **characterized in that** mechanical guide blocks (44) are provided on the opposite side of the band saw blade (20).

11. The band saw of claims 9 or 10, **characterized in that** the band saw blade (20) is guided over two wheels (12, 14), and that the guides (46) extend beyond a common tangent line (36) interconnecting the wheels (12, 14).

12. The band saw of claim 9, **characterized in that** the band saw blade (20) is guided over two wheels (12, 14), and that the guides (346₁, 346₂) extend along a common tangent line (36) interconnecting the wheels (12, 14) and concurrently configuring mechanical guides.

13. A band saw assembly having a first band saw (210₁) and a second band saw (210₂) of any of claims 1 to 12, **characterized in that** the band saws (210₁, 210₂) are positioned mirror-symmetrically one besides the other, wherein each of the band saws (210₁, 210₂) comprises a band saw blade (20, 220) against which the sawing material (61) is adapted to be guided in a feed direction (60), and with a guide (246₁₁, 246₁₂, 246₂₁, 246₂₂) each for the band saw blades (20, 220), wherein the guides (246₁₁, 246₁₂, 246₂₁, 246₂₂) each comprise at least one front and one rear magnet (56a, 56b).

14. A method of spatially positioning a band saw blade (20) while a sawing material (61) is guided against the band saw blade (20) in a feed direction (60), in which a magnet force (70, 72) is exerted on the band saw blade (20), and the magnet force (70, 72), and thereby a position (d) of the band saw blade (20) is adjusted transversely to the feed direction (60), **characterized in that** differently set magnet forces (70, 72), as viewed in the feed direction (60) of the sawing material (61), are exerted on a front area (58a) and on a rear area (58b) of the band saw blade (20).

15. The method of claim 14, **characterized in that** a natural frequency (f₀) of the circulating band saw blade (20) when in engagement and/or out of engagement with the sawing material (61) is detected, and that the magnet force (70, 72) is adjusted for compensating periodical movements of the band saw blade (20) directed transversely to the feed direction (60) in synchronism with the natural frequency (fo).

16. The method of claim 14 or 15, **characterized in that** a periodical evasive movement of the circulating band saw blade (20) caused by a butt joint (22) running by the guide (40, 42), and being directed transversely to the feed direction (60) is detected, and that the magnet force (70, 72) is adjusted for compensating such movements of the band saw blade (20) in synchronism with the butt joint (22) running by the guide (40, 42).

## Revendications

1. Scie à ruban avec une lame de scie à ruban (20), contre laquelle un produit de sciage (61) peut être amené dans une direction d'avance (60), avec un guidage (40, 42) pour la lame de scie à ruban (20), dans laquelle le guidage (40, 42) présente au moins un aimant (56a, 56b) qui exerce sur la lame de scie à ruban (20) une force (70, 72) influençant la position (d) de la lame de scie à ruban (20) dans l'espace, ledit au moins un aimant (56a, 56b) est en outre réglable au niveau de la force qu'il exerce et la force (70, 72) est orientée transversalement à la direction d'avance (60), **caractérisée en ce que** le guidage (40, 42), considéré dans la direction d'avance (60) du produit de sciage (61), présente un aimant antérieur (56a) et un aimant postérieur (56b), les aimants (56a, 56b) étant situés en face d'une zone antérieure (58a) ou d'une zone postérieure (58b) de la lame de scie à ruban (20).

2. Scie à ruban selon la revendication 1, **caractérisée en ce qu'**il est prévu au moins deux aimants (56a, 56b), **en ce que** les aimants (56a, 56b) sont des électroaimants et **en ce que** les aimants (56a, 56b) peuvent fonctionner avec des forces magnétiques différentes, de telle manière que la lame de scie à ruban (20) soit tordue autour de son axe médian (72).

3. Scie à ruban selon la revendication 1 ou 2, **caractérisée en ce que** le guidage (40, 42) présente des détecteurs (62a, 62b) destinés à détecter la position (d) de la lame de scie à ruban (20) dans une direction transversalement à la direction d'avance (61), et **en ce que** les détecteurs (62a, 62b) se trouvent en liaison active avec les aimants (56a, 56b) au moyen d'un régulateur (80).

4. Scie à ruban selon la revendication 3, **caractérisée en ce qu'**une valeur de consigne (dₛ) de la position (d) peut être fournie au régulateur (80).

5. Scie à ruban selon la revendication 3 ou 4, **caractérisée en ce que** des moyens (82) sont associés aux détecteurs (62a, 62b) pour détecter une fréquence propre (fo) de la lame de scie à ruban en mouvement (20) se trouvant en position dégagée et/ou en position engagée avec le produit de sciage (61), et **en ce que** les moyens (82) envoient audit au moins un aimant (56a, 56b) des signaux de commande pour compenser des mouvements périodiques et orientés transversalement à la direction d'avance (60) de la lame de scie à ruban (20) au rythme de la fréquence propre (f₀).

6. Scie à ruban selon l'une quelconque des revendications 3 à 5, **caractérisée en ce que** des moyens (84) sont associés aux détecteurs (62a, 62b) pour détecter un mouvement périodique de déviation de la lame de scie à ruban en mouvement (20) transversalement à la direction d'avance (60) provoqué par une jointure (22) de la lame de scie à ruban (20) passant devant le guidage (40, 42), et **en ce que** les moyens (84) envoient audit au moins un aimant (56a, 56b) des signaux de commande pour compenser ces mouvements de la lame de scie à ruban (20) au rythme (T₀) du passage de la jointure (22) devant le guidage (40, 42).

7. Scie à ruban selon l'une quelconque des revendications 1 à 6, **caractérisée en ce que** le guidage (40, 42), considéré dans la direction de sciage (27) de la lame de scie à ruban (20), présente un module de guidage (40) avant et un module de guidage (42) après le produit de sciage (61).

8. Scie à ruban selon l'une quelconque des revendications 1 à 7, **caractérisée en ce que** les guidages (146₁₁, 146₁₂, 146₂₁, 146₂₂), considérés transversalement à la direction d'avance (60), sont placés de chaque côté de la lame de scie à ruban (20).

9. Scie à ruban selon l'une quelconque des revendications 1 à 8, **caractérisée en ce que** les guidages (46; 246₁₁, 246₁₂, 246₂₁, 246₂₂; 346₁, 346₂), considérés transversalement à la direction d'avance (60), sont placés d'un seul côté de la lame de scie à ruban (20).

10. Scie à ruban selon la revendication 9, **caractérisée en ce qu'**il est prévu des blocs de guidage mécaniques (44) sur un côté opposé de la lame de scie à ruban (20).

11. Scie à ruban selon la revendication 9 ou 10, **caractérisée en ce que** la lame de scie à ruban (20) est guidée sur deux rouleaux (12, 14), et **en ce que** les guidages (46) sont en saillie vers l'extérieur au-delà d'une tangente commune (36) reliant les rouleaux (12, 14).

12. Scie à ruban selon la revendication 9, **caractérisée en ce que** la lame de scie à ruban (20) est guidée sur deux rouleaux (12, 14), et **en ce que** les guidages (346₁, 346₂) sont disposés le long d'une tangente commune (36) reliant les rouleaux (12, 14) et forment en même temps des guidages mécaniques.

13. Ensemble de scies à ruban avec une première scie à ruban (210₁) et une deuxième scie à ruban (210₂) selon l'une quelconque des revendications 1 à 12, **caractérisé en ce que** les scies à ruban (210₁, 210₂) sont disposées l'une à côté de l'autre dans une position de symétrie de rabattement, dans lequel chaque scie à ruban (210₁, 210₂) comporte respectivement une lame de scie à ruban (20, 220), et le produit de sciage (61) peut être amené contre les lames de scie à ruban (20, 220) dans la direction d'avance (60), avec chaque fois un guidage (246₁₁, 246₁₂, 246₂₁, 246₂₂) pour les lames de scie à ruban (20, 220), dans lequel les guidages (246₁₁, 246₁₂, 246₂₁, 246₂₂) présentent chacun un aimant antérieur et un aimant postérieur (56a, 56b).

14. Procédé pour positionner une lame de scie à ruban (20) dans l'espace, pendant que l'on amène un produit de sciage (61) contre la lame de scie à ruban (20) dans une direction d'avance (60), dans lequel on exerce une force magnétique (70, 72) sur la lame de scie à ruban (20) et on règle la force magnétique (70, 72) et de ce fait une position (d) de la lame de scie à ruban (20) transversalement à la direction d'avance (60), **caractérisé en ce que** l'on exerce des forces magnétiques (70, 72) différemment réglées, considérées dans la direction d'avance (60) d'un produit de sciage (61), sur une zone antérieure (58a) ou sur une zone postérieure (58b) de la lame de scie à ruban (20).

15. Procédé selon la revendication 14, **caractérisé en ce que** l'on détecte une fréquence propre (fo) de la lame de scie à ruban en mouvement (20) se trouvant en position dégagée et/ou en position engagée avec le produit de sciage (61), et **en ce que** l'on règle la force magnétique (70, 72) pour compenser des mouvements périodiques et orientés transversalement à la direction d'avance (60) de la lame de scie à ruban (20) au rythme de la fréquence propre (f₀).

16. Procédé selon la revendication 14 ou 15, **caractérisé en ce que** l'on détecte un mouvement périodique de déviation de la lame de scie à ruban en mouvement (20) transversalement à la direction d'avance (60) provoqué par une jointure (22) de la lame de scie à ruban (20) passant devant un guidage (40, 42) de la lame de scie à ruban (20), et **en ce que** l'on règle la force magnétique (70, 72) pour compenser ces mouvements de la lame de scie à ruban (20) au rythme (To) du passage de la jointure (22) devant le guidage (40, 42).
